# EUROPÄISCHE PATENTANMELDUNG

(11) **EP 2 039 973 A2**
(43) Veröffentlichungstag der Anmeldung: **25.03.2009**
(21) Anmeldenummer: 08160205.4
(22) Anmeldetag: 11.07.2008
(51) Int. Cl.: F16L 33/207

(54) **Schlauchleitung**

(30) Priorität: 07.09.2007 DE 102007042815
(71) Anmelder: ContiTech Kühner GmbH & Cie. KG, 71570 Oppenweiler (DE)
(72) Erfinder: Marschall, Peter, 74081 Heilbron (DE)
(74) Vertreter: Finger, Karsten

(57) **Zusammenfassung**

Die Erfindung betrifft eine Schlauchleitung (1) mit mindestens einer Anschlussarmatur, wobei in der Anschlussarmatur der Schlauch (2) zwischen einem Schlauchnippel (3) und einer Quetschhülse (5) durch plastische Verformung der Quetschhülse (5) verpressbar ist. Die Schlauchleitung (1) soll bei kurzer Bauweise der Quetschhülse (5) ein sicheres Verpressen auch verstärkter Schläuche (2) auf dem Schlauchnippel (3) ermöglichen. Dazu ist die plastische Verformung der Quetschhülse (5) als über ihre axiale Länge und ihren Umfang verteilt nach innen ragende, im wesentlichen konische Nasen (6) mit abgerundeten Spitzen (9) ausgebildet. Zwischen den Nasen (6) und dem Schlauch (2) sind Druckbereiche ausgebildet, deren axiale Ausdehnung etwa gleich ist der Ausdehnung der Druckbereiche in Umfangsrichtung. Die Verpressung des Schlauchs (2) auf dem Nippel (3) ist quasi punktförmig, so dass sich eine besonders hohe Flächenpressung erzeugen lässt. Die Festigkeitsträger (7) sind um die abgerundeten Spitzen (9) der Nasen (6) herum gelenkt. Dadurch können erhöhte Reibungskräfte übertragen werden.

## Beschreibung

Die Erfindung betrifft eine Schlauchleitung mit mindestens einer Anschlussarmatur, wobei in der Anschlussarmatur der Schlauch zwischen einem Schlauchnippel und einer Quetschhülse durch plastische Verformung der Quetschhülse verpressbar ist.

Derartige Schlauchleitungen sind in einer großen Vielzahl bekannt und im Einsatz. Insbesondere im Hochdruckbereich werden hohe Anforderungen an die Dichtheit und an die Haltekräfte der Verpressung gestellt.

Bei Verwendung verstärkter Schläuche, beispielsweise bei flexiblen Klimaleitungen in Kraftfahrzeugen tritt als besondere Anforderung an die Verpressung noch hinzu, dass im Bereich der Verpressung das Verstärkungsmaterial, häufig ein textiles oder metallisches Gewebe, durch die Verpressung nicht beschädigt wird.

Für die Verpressung der Quetschhülse sind verschiedene Arten bekannt, nämlich
a) radiale Verpressung unter tangentialer Stauchung der Quetschhülse, so dass die Quetschhülse mindestens einen Bereich mit auf dem vollen Umfang im wesentlichen gleichmäßig reduziertem Durchmesser aufweist und
b) radiale Einpressung von axialen Rillen, so dass die Quetschhülse im Bereich der Verpressung Bereiche aufweist, in denen der Durchmesser verringert ist, die sich mit Bereichen abwechseln, in denen der Durchmesser nicht verringert ist.

Die Haltekräfte sind häufig durch eine Formgebung des Nippels, beispielsweise durch umlaufende Rillen oder Bunde noch vergrößerbar.

Die oben beschriebene Ausführungsform a) weist den Nachteil auf, dass auch der Schlauch im Bereich der Verpressung vollständig im Durchmesser reduziert ist, also auch tangential gestaucht ist. Dies ist insbesondere bei Verwendung verstärkter Schläuche von Nachteil, da das Verstärkungsmaterial durch die tangentiale Stauchung in ihrer Lage verschoben sein kann, was zu Schlaufen oder Verwerfungen und damit zu einer Trennung von Decklage und Innenlage führen kann. Dies erhöht die Gefahr eines Bruchs des Verstärkungsmaterials mit der damit resultierenden Reduzierung der Haltekraft.

Die Ausführungsform b) ermöglicht demgegenüber, dass das Verstärkungsmaterial bei der Verpressung in die Bereiche ausweichen kann, in denen der Durchmesser der Quetschhülse nicht reduziert ist. Dabei kann es jedoch dazu kommen, dass die Haltekräfte absinken, da ein Form- oder Reibschluss nur noch in den Bereichen wirksam ist, in denen der Durchmesser der Quetschhülse reduziert ist. Dies lässt sich meist durch entsprechende axiale Verlängerung der Quetschhülse ausgleichen wobei jedoch der notwendige größere Bauraum zur Verfügung stehen muss.

Bei der Verwendung von Längsrillen nach Ausführungsform b) ist außerdem die Wirksamkeit von umlaufenden Rillen oder Bunden des Schlauchnippels auch auf die Bereiche begrenzt, in denen der Durchmesser der Quetschhülse reduziert ist.

In der DE 1 970 807 U ist eine Schlauchleitung gezeigt, die der oben genannten Ausführungsform a) zugeordnet werden kann. Die Quetschhülse kann hier so stark verformt sein, dass auch der Schlauchnippel eine Einschnürung erhält. Dadurch wird zwar ein gewisser Formschluss erzielt, der Strömungsquerschnitt im Schlauchnippel allerdings reduziert.

Die DE 38 220 41 C1 und die DE 43 10 818 A1 zeigen jeweils Schläuche vom oben beschriebenen Typ b), wobei in der DE 38 220 41 C1 die Quetschhülse eine zusätzliche Einrichtung zum leichteren Lösen der bereits verpressten Quetschhülse aufweist.

Der Erfindung liegt die Aufgabe zugrunde, eine Schlauchleitung der eingangs geschilderten Art zu schaffen, die unter Vermeidung der genannten Nachteile bei kurzer Bauweise der Quetschhülse ein sicheres Verpressen auch verstärkter Schläuche auf dem Schlauchnippel ermöglicht.

Diese Aufgabe wird dadurch gelöst, dass die plastische Verformung der Quetschhülse als über ihre axiale Länge und ihren Umfang verteilt nach innen ragende Nasen ausgebildet sind, durch die der Schlauch auf dem Schlauchnippel verpressbar ist, wobei zwischen den Nasen und dem Schlauch punktuelle Druckbereiche ausgebildet sind, deren axiale Ausdehnung etwa gleich ist der Ausdehnung der Druckbereiche in Umfangsrichtung.

Durch diese Ausbildung ist die Verpressung des Schlauchs auf dem Nippel quasi punktförmig, so dass sich dadurch eine besonders hohe Flächenpressung erzeugen lässt. Die Festigkeitsträger sind dabei um die Spitzen der Nasen herum gelenkt. Dadurch können erhöhte Reibungskräfte übertragen werden. Das in den Druckbereichen verdrängte Material des Schlauchs kann in allen Richtungen in die benachbarten Zonen zwischen den Nasen ausweichen. Die eingebetteten Festigkeitsträger können sich dadurch polygonartig verformen, so dass eine tangentiale und/oder axiale Stauchung des Festigkeitsträgermaterials vermeidbar ist. Dies ist insbesondere bei Verwendung metallischer Festigkeitsträger vorteilhaft, da diese bei Stauchbelastung leicht brechen.

In einer weiteren Ausbildung der Erfindung sind die Nasen axial und in Umfangsrichtung der Quetschhülse zueinander versetzt angeordnet.

Durch die geometrischen Verhältnisse der Nasen mit in Umfangsrichtung und in axialer Richtung annähernd gleicher Ausdehnung lässt sich eine derartige Anordnung leicht realisieren. Sie bietet den Vorteil, dass, anders als bei axialen Rillen, der gesamte Umfang der Quetschhülse zum Aufbau von Flächenpressung zwischen Schlauch und Nippel nutzbar ist.

In einer Weiterbildung der Erfindung sind die Nasen im wesentlichen konisch ausgebildet.

Die Konusform der Nasen ist besonders einfach durch Einpressen korrespondierend geformter Stempel in die Quetschhülse erreichbar. Die Stempel sind durch die Konusform ohne hohe Reibung aus den umgeformten Bereichen wieder entfernbar.

In einer Weiterbildung der Erfindung weisen die Nasen abgerundete oder abgeflachte Spitzen auf.

Diese Ausbildung der Spitzen vermeidet allzu hohe Kraftspitzen, die zu einer Schädigung des Elastomermaterials führen könnten. Außerdem ist die Gefahr der Rissinitialisierung im Schlauchmaterial durch den Wegfall scharfer Kanten an den Nasenspitzen reduziert.

In einer Weiterbildung der Erfindung ist die Flächenpressung zwischen Quetschhülse, Schlauch und Schlauchnippel durch vorbestimmte plastische Ausformung der Nasen derart einstellbar, dass die abgerundeten Spitzen der Nasen zwischen die einzelnen Fäden der Festigkeitsträger des Schlauchs gedrängt sind.

Durch diese Anordnung entsteht eine Art Formschluss, der die Haltekraft der Verbindung verbessert. Die Nasen bilden eine Art Haken, an denen sich die Festigkeitsträger einhängen, wodurch die Haltekraft der Verbindung verbessert ist.

In einer Weiterbildung der Erfindung sind die Druckbereiche kreisförmig ausgebildet.

Durch diese Ausbildung, beispielsweise durch kegelförmige Nasen, ist die Gefahr der Beschädigung des Verstärkungsmaterials und des Schlauchs an sich dadurch verringert, dass keine scharfen Kanten vorhanden sind, die in das Schlauchmaterial einschneiden könnten.

In einer Weiterbildung der Erfindung ist der Durchmesser der Quetschhülse so bemessen, dass die Quetschhülse in unverpresstem Zustand auf dem gesamten Umfang von der Oberfläche des Schlauches beabstandet ist, so dass zwischen Schlauch und Quetschhülse ein Spalt gebildet ist.

Ein derartiger Spalt hat den Vorteil, dass das Material des Schlauches in verpresstem Zustand mehr Platz hat, in die den Nasen benachbarten Bereiche auszuweichen, so dass die Gefahr einer Stauchung des Festigkeitsträgermaterials besonders gering ist. Insbesondere bei Temperaturbeaufschlagung der Leitung ist durch den Spalt die unterschiedliche Wärmeausdehnung von Elastomer und metallischem Werkstoff des Schlauchnippels und der Quetschhülse gut ausgleichbar.

Anhand der Zeichnung wird nachstehend ein Beispiel der Erfindung näher erläutert. Es zeigt
- Fig. 1: eine dreidimensionale Ansicht einer Schlauchleitung mit einer erfindungsgemäß verpressten Quetschhülse,
- Fig. 2: einen Längsschnitt der Schlauchleitung mit erfindungsgemäßer Quetschhülse und
- Fig. 3: einen Querschnitt der erfindungsgemäßen Schlauchleitung im Bereich der verpressten Quetschhülse.

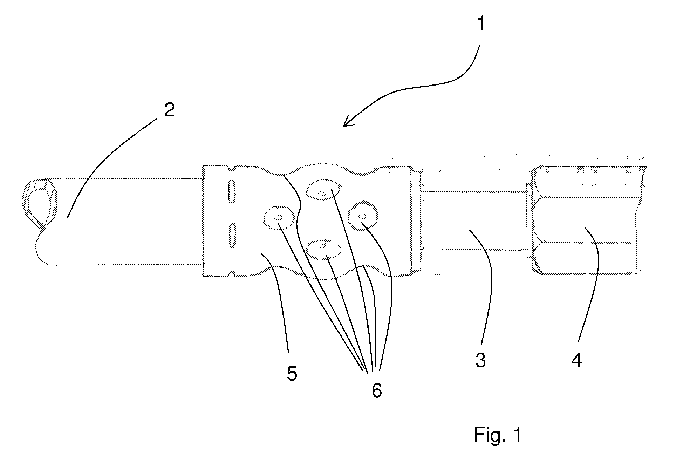

Die in Figur 1 gezeigte Schlauchleitung 1 weist einen Schlauch 2, einen Schlauchnippel 3, eine Überwurfmutter 4 zur Befestigung des Schlauchnippels 3 an einem hier nicht gezeigten Aggregat und eine Quetschhülse 5 auf. Die Quetschhülse 5 umgibt das Endes des Schlauchs 2, welches auf den Schlauchnippel 3 aufgesteckt ist.

Die Quetschhülse 5 weist auf ihrer Länge und auf ihrem Umfang verteilt zueinander versetzte, nach innen ragende und nach dem Aufstecken des Schlauchs 2 mit der Quetschhülse 5 auf den Schlauchnippel 3 durch plastische Verformung erzeugte Nasen 6 auf. Die Nasen 6 weisen einen annähernd kreisförmigen Querschnitt auf und klemmen den Schlauch 2 auf dem hier nicht sichtbaren Abschnitt des Schlauchnippels 3 fest, auf den der Schlauch 2aufgesteckt ist.

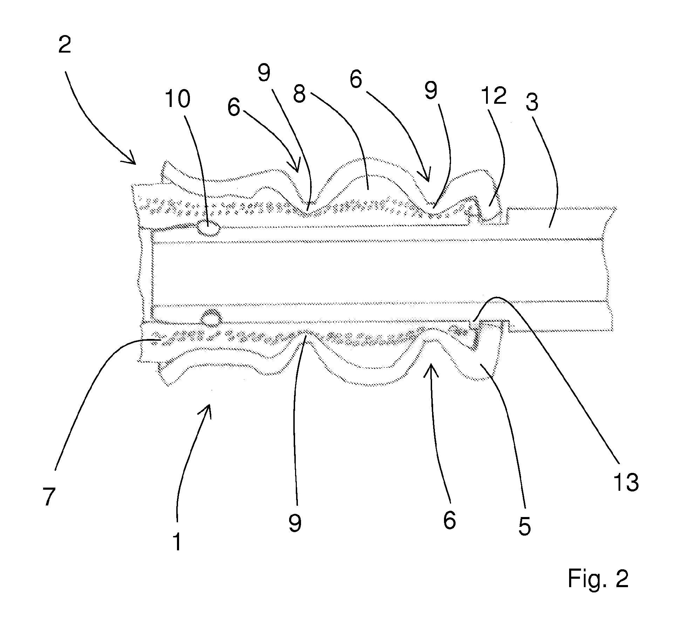

In Figur 2 ist ein Längsschnitt der Schlauchleitung 1 gezeigt. Der Schlauch 2 weist ein textiles Verstärkungsgewebe 7 auf, welches als Festigkeitsträger wirksam ist und in ein elastomeres Material 8 eingebettet ist. Die Nasen 6 sind konisch ausgebildet und bilden Kegelstümpfe, die eine abgerundete Spitze 9 aufweisen. Die Abrundung schützt den Festigkeitsträger 7 vor Beschädigungen.

Beabstandet von dem im Schlauch 2 steckenden Ende des Schlauchnippels 3 ist auf dem Schlauchnippel eine O-Ring-Dichtung 10 angeordnet, die die Dichtheit zwischen dem Schlauchnippel 3 und dem Schlauch 2 verbessert. Zur Erhöhung der Flächenpressung zwischen dem Schlauch 2 und der Dichtung 10 ist die Quetschhülse 5 in einem Bereich, der über der Dichtung 10 liegt, durch plastische Verformung im Umfang reduziert.

Weiterhin weist die Quetschhülse 5 an dem dem aufgesteckten Ende des Schlauchs 2 zugeordneten Ende einen nach innen ragenden umlaufenden Bund 12 auf. Der Bund 12 ist durch plastische Verformung der Quetschhülse 5 nach dem Aufstecken des Schlauchs 2 mit der Quetschhülse 5 auf den Schlauchnippel 3 erzeugt und greift hinter einen umlaufenden, radial nach außen ragenden Absatz 13 des Schlauchnippels 3. Dadurch ist eine erhöhte Sicherheit gegen Abziehen der Quetschhülse 5 vom Schlauchnippel 3 gegeben.

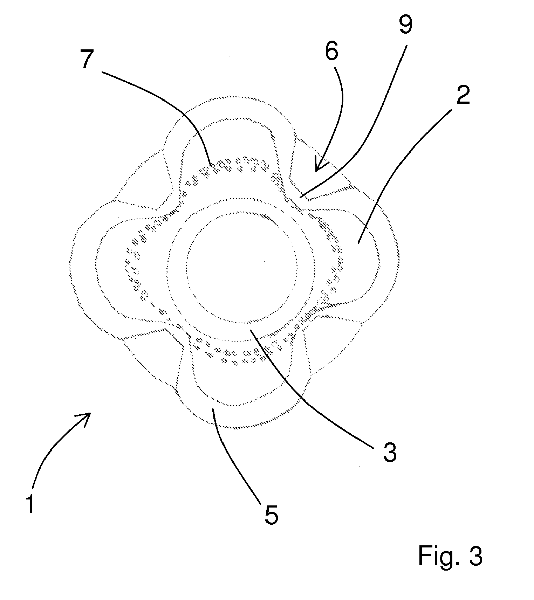

In Figur 3 ist die erfindungsgemäße Schlauchleitung 1 in einem Querschnitt gezeigt. Die Nasen 6 pressen den Schlauch 2 gegen den Nippel 3. Dabei sind die Festigkeitsträger 7 um die abgerundeten Spitzen 9 der Nasen 6 herum gelenkt. Dies führt zu einer Art Formschluss zwischen den Nasen 6 und den Festigkeitsträgern 7, der die Sicherheit der Quetschverbindung weiter erhöht.

### Bezugszeichenliste

### (Teil der Beschreibung)

- 1: Schlauchleitung
- 2: Schlauch
- 3: Schlauchnippel
- 4: Überwurfmutter
- 5: Quetschhülse
- 6: Nasen
- 7: Festigkeitsträger des Schlauchs 2
- 9: abgerundete Spitzen der Nasen 6
- 10: O-Ring-Dichtung
- 12: Bund der Quetschhülse 5
- 13: Absatz des Schlauchnippels 3

## Patentansprüche

1. Schlauchleitung (1) mit mindestens einer Anschlussarmatur, wobei in der Anschlussarmatur der Schlauch (2) zwischen einem Schlauchnippel (3) und einer Quetschhülse (5) durch plastische Verformung der Quetschhülse (5) verpressbar ist, **dadurch gekennzeichnet, dass** die plastische Verformung der Quetschhülse (5) als über ihre axiale Länge und ihren Umfang verteilt nach innen ragende Nasen (6) ausgebildet sind, durch die der Schlauch (2) auf dem Schlauchnippel (3) verpressbar ist, wobei zwischen den Nasen (6) und dem Schlauch (2) punktuelle Druckbereiche ausgebildet sind, deren axiale Ausdehnung etwa gleich ist der Ausdehnung der Druckbereiche in Umfangsrichtung.

2. Schlauchleitung (1) nach Anspruch 1, **dadurch gekennzeichnet, dass** die Nasen (6) axial und in Umfangsrichtung der Quetschhülse (5) zueinander versetzt angeordnet sind.

3. Schlauchleitung (1) nach Anspruch 1 oder 2, **dadurch gekennzeichnet, dass** die Nasen (6) im wesentlichen konisch ausgebildet sind.

4. Schlauchleitung (1) nach Anspruch 1, 2 oder 3, **dadurch gekennzeichnet, dass** die Nasen (6) abgerundete oder abgeflachte Spitzen (9) aufweisen.

5. Schlauchleitung (1) nach einem der vorhergehenden Ansprüche, **dadurch gekennzeichnet, dass** die Flächenpressung zwischen Quetschhülse (5), Schlauch (2) und Schlauchnippel (3) durch vorbestimmte plastische Ausformung der Nasen (6) derart einstellbar ist, dass die abgerundeten Spitzen (9) der Nasen (6) quasi zwischen die einzelnen Fäden der Festigkeitsträger (7) des Schlauchs (2) gedrängt sind.

6. Schlauchleitung (1) nach einem der vorhergehenden Ansprüche, **dadurch gekennzeichnet, dass** die Druckbereiche kreisförmig ausgebildet sind.

7. Schlauchleitung (1) nach einem der vorhergehenden Ansprüche, **dadurch gekennzeichnet, dass** der Durchmesser der Quetschhülse (5) so bemessen ist, dass die Quetschhülse (5) in unverpresstem Zustand auf dem gesamten Umfang von der Oberfläche des Schlauchs (2) beabstandet ist, so dass zwischen Schlauch (2) und Quetschhülse (5) ein Spalt gebildet ist.
